# EUROPEAN PATENT SPECIFICATION

(11) **EP 4 482 990 B1**
(45) Date of publication and mention of the grant of the patent: **25.11.2026**
(21) Application number: 23710482.3
(22) Date of filing: 17.02.2023
(51) Int. Cl.: C21B 7/24, C21B 13/00

(54) **A METHOD FOR THE PRODUCTION OF SPONGE IRON FROM IRON ORE**
VERFAHREN ZUR HERSTELLUNG VON EISENSCHWAMM AUS EISENERZ
PROCÉDÉ DE PRODUCTION DE FER SPONGIEUX À PARTIR DE MINERAI DE FER

(30) Priority: 21.02.2022 SE 2250229
(43) Date of publication of application: 01.01.2025
(73) Proprietor: HYBRIT Development AB, 111 64 Stockholm (SE)
(72) Inventor: VON SCHENCK, Henrik, 131 33 Nacka (SE)
(74) Representative: Zacco Sweden AB
(86) International application number: PCT/SE2023/050147
(87) International publication number: WO 2023/158364

(56) References cited:
- US-A1- 2002 007 699
- US-A1- 2012 111 149

## Description

### TECHNICAL FIELD

The present invention relates to a method for the production of sponge iron from iron ore, comprising the steps of: charging iron ore into a direct reduction shaft; introducing a hydrogen-rich process gas into the direct reduction shaft in order to reduce the iron ore and produce sponge iron; wherein the step of introducing the hydrogen-rich process gas comprises the steps of: conducting a reduction gas comprising at least 80 vol.% hydrogen gas through a first gas line from a hydrogen gas source to the reduction shaft, and heating the reduction gas in said first gas line to a first temperature. The hydrogen gas source may comprise both a pure hydrogen source, such an a electrolyzer unit or a pure hydrogen gas storage, and a return flow of gas from the top of the reduction shaft.

The present invention also relates to an arrangement for producing sponge iron, comprising: a direct reduction shaft having an inlet for the introduction of iron ore and an outlet for the removal of produced sponge iron out of the direct reduction shaft, a hydrogen gas source, a first gas line extending from the hydrogen gas source to the reduction shaft, a carbon dioxide gas source, an oxygen gas source, and a heater arranged in the first gas line, for heating a gas flowing in the first gas line.

### BACKGROUND

In connection to the direct reduction of iron ore to sponge iron by means of predominantly hydrogen gas as the reduction gas, a carbon-containing gas may be added to the hydrogen gas in order to enable some carburization of the sponge iron, thereby making the sponge iron more suitable for the melting thereof in, for example, an electric arc furnace.

It has been suggested to use carbon dioxide as the carbon-containing gas. Provided that the process gas constituted by the reduction gas and the added carbon dioxide has a sufficiently high temperature, the carbon dioxide will react with the hydrogen, thereby forming carbon monoxide. Carburization by means of carbon monoxide is preferred. Therefore, process gas temperature control is essential in order to ensure that carbon monoxide is formed upon addition of carbon dioxide gas to the reduction gas.

It is therefore an object of the present invention to suggest a method and an arrangement that enable control of the process gas composition and control of the process gas temperature, and thereby an efficient and reliable control of the carburization of the sponge iron. Patent documents US 2002/007699 A1 and US 2012/111149 further disclose a method for the production of refined iron from iron ore.

### SUMMARY

The object of the invention is achieved by means of a method for the production of sponge iron from iron ore, the method being disclosed in appended claims 1-9.

The addition of the oxygen gas will result in a combustion and increase of temperature of the reduction gas (with the added carbon-dioxide). Provided that the temperature of the reduction gas high enough to allow the combustion reaction, the addition of oxygen will thus be used as a means of controlling the temperature of the reduction gas such that the carbon dioxide therein will to a large extent react with the hydrogen and form carbon monoxide. A heater which is mainly responsible for heating the reduction gas up to a predetermined level might not be fast enough in its response to respond to and compensate for sudden gas temperature changes caused by, for example, fluctuations of the flow rate of the added carbon dioxide. The oxygen addition, on the other hand, will result in immediate and local temperature increase, and will be an efficient tool for quick and exact temperature control on top of the basic heating provided by the heater. The flow rate of added carbon dioxide gas should preferably be determined such that a carbon content of at least 0.05 wt.%, preferably at least 0.5 wt.%, or even more preferably at least 1.0 wt.% is achieved in the sponge iron. In order to have an even product quality, fluctuations of the carbon content in the produced sponge iron should be minimized. The hydrogen gas source comprises an electrolyzer unit or a hydrogen gas storage or a combination thereof. According to one embodiment, the hydrogen gas source also comprises a return gas circuit connected in one end to the top of the reduction shaft and in another end to the first gas line. Return gas is referred to as used process gas leaving the direct reduction shaft, typically from the top of the direct reduction shaft. The return gas may comprise considerable amounts of hydrogen gas that preferably is returned to the first gas line. The return gas circuit may comprise one or more devices for cleaning of return gas, compressors, etc. as is well known within this field of technology. The reduction gas is thus comprised by gas both from the hydrogen gas source and from the return gas circuit. The arrangement preferably also comprises at least one compressor provided in the first gas line for generating a suitable process gas pressure, typically in the range of 3-8 bar. According to one embodiment, the reduction gas comprises at least 90 vol.% hydrogen gas.

The method comprises the steps of: measuring a flow rate of the reduction gas in the first gas line, and controlling a flow rate of added carbon dioxide on basis of the measured flow rate of the reduction gas. Provided that the composition of the reduction gas is relatively constant, or can be foreseen with acceptable precision, a knowledge about the reduction gas flow rate will be informative enough to enable a determination of a correct carbon dioxide gas flow rate in order to achieve a requested ratio between hydrogen and carbon dioxide.

According to an aspect, the method comprises the further steps of:
- measuring the composition of the reduction gas in the first gas line, and
- controlling the flow rate of added carbon dioxide on basis of the measured composition of the reduction gas. Knowledge about the composition of the reduction gas will further improve a precise and correct determination of a carbon dioxide gas flow rate in order to achieve a requested ratio between hydrogen and carbon dioxide.

According to an aspect, said method comprises the steps of:
a) measuring a temperature of the hydrogen-rich process gas downstream a point along the first gas line at which the carbon dioxide gas and the oxygen gas is added to the reduction gas, and
b) controlling a flow rate of the added oxygen gas on basis of the measured temperature of the hydrogen-rich process gas. By measuring the temperature downstream the point where the oxygen is added, an efficient temperature control loop is enabled.

According to an aspect, the method comprises the steps of repeating steps a) to b), wherein step b) comprises the steps of:
c) increasing the flow rate of the added oxygen gas if the measured temperature of the hydrogen-rich process gas is below a first threshold value Tth1, and
d) decreasing the flow rate of the added oxygen gas if the measured temperature of the hydrogen-rich process gas is above a second threshold value Tth2, wherein Tth1 < Tth2.

According to an aspect, Tth1 > 750 °C. According to one embodiment Tth1 = 800 °C. Thereby, at least some reaction of carbon dioxide to carbon monoxide in the reduction gas is achieved.

According to an aspect, Tth1 ≥ 900 °C. According to one embodiment, Tth1 = 900 °C. Thereby, substantial reaction of carbon dioxide to carbon monoxide in the reduction gas is achieved.

According to an aspect, Tth2 ≤ 1 100 °C. According to one embodiment Tth2=1 100 °C. Thereby, excessive temperature conditions, negative to the reduction process, in the reduction shaft are avoided.

According to an aspect, the method comprises the step of measuring the temperature of the heated reduction gas upstream a point along said first gas line at which the oxygen gas is added to the reduction gas and adding oxygen gas only when the temperature of the heated reduction gas at said point is above 750 °C. Thereby, ignition and combustion caused by the oxygen gas is obtained. According to one embodiment, oxygen gas is added to the reduction gas only when the temperature of the heated reduction gas at said point is above 800 °C.. Accordingly, a heater used for heating the reduction gas upstream the point at which oxygen gas is added should be controlled so as to heat the reduction gas up to at least 750 °C, preferably up to at least 800 °C.

According to an aspect, each of the carbon dioxide gas and the oxygen gas is added to the reduction gas in the first gas line in proximity to an end of the first gas line where the hydrogen-rich process gas is introduced into the reduction shaft. According to one embodiment, proximity is referred to as less than 10 meters. According to another embodiment, proximity is referred to as less than 5 meters.

The object is also obtained by an arrangement for producing sponge iron, according to appended claims 10-15.

The hydrogen gas source comprises an electrolyzer unit or a hydrogen gas storage or a combination thereof. According to one embodiment, the hydrogen gas source also comprises a return gas circuit connected in one end to the top of the reduction shaft and in another end to the first gas line. The return gas circuit may comprise one or more devices for cleaning of return gas, compressors, etc. as is well known within this field of technology. The reduction gas is thus comprised by gas both from the electrolyzer and/or storage and from the return gas circuit.

The arrangement comprises components arranged for the purpose of enabling the method disclosed hereinabove. The advantages thereof are the same as those already disclosed with reference to the method.

The arrangement comprises a first flow rate sensor for sensing the flow rate of the reduction gas in the first gas line, a first valve device for regulating a flow rate of carbon dioxide in said second gas line, and a control unit configured to control the first valve device on basis of input from the first flow rate sensor.

According to an aspect, the arrangement comprises
- a gas composition sensor for sensing the composition of the reduction gas in the first gas line, and
- a control unit configured to control the first valve device on basis on input from the gas composition sensor.

According to an aspect, the arrangement comprises a temperature sensor for sensing the temperature of gas inside the first gas line downstream of a point at which the second gas line and the third gas line are connected to the first gas line a second valve device for regulating a flow rate of the added oxygen gas in the third gas line, and a control unit configured to control a flow rate of the added oxygen gas in the third gas line on basis of input from the temperature sensor.

According to an aspect, the arrangement comprises a second temperature sensor for sensing the temperature of gas inside the first gas line downstream the heater and upstream the point at which the third gas line is connected to the first gas line, wherein the control unit is configured to allow a flow of added oxygen gas in the third gas line only provided that the temperature measured by the second temperature sensor is above a predetermined level. According to an aspect, the first gas line comprises an end through which hydrogen-rich process gas, formed by the reduction gas, the added carbon dioxide gas and the added oxygen gas, is introduced into the reduction shaft, and wherein at least the third gas line is connected to the first gas line adjacent said end.

According to an aspect, the second and the third gas lines are connected to the first gas line at the same point along the first gas line, or the third gas line is connected to the first gas line downstream a point along the first gas line at which the second gas line is connected to the first gas line.

Further objects and advantages may be found in the detailed description.

### BRIEF DESCRIPTION OF THE DRAWING

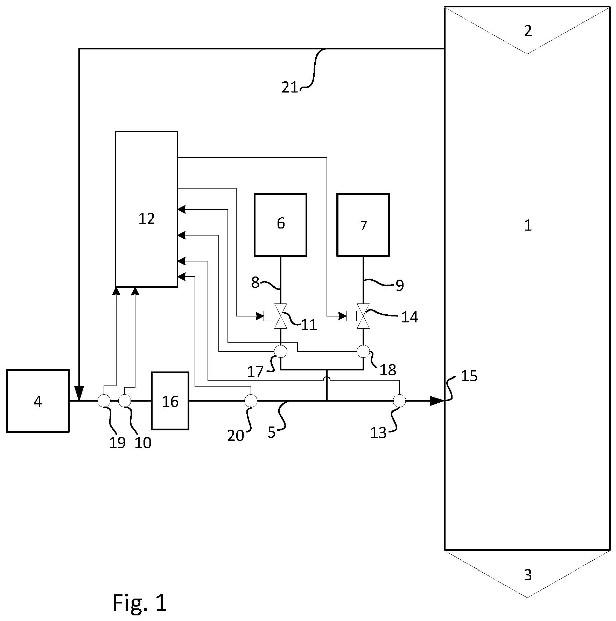

Figure 1 is a schematic representation of an arrangement according to an embodiment of the present invention.

### DETAILED DESCRIPTION

In the following detailed description, embodiments of the method of the invention will be disclosed, as well an arrangement configured to carry out the method.

According to an embodiment of the invention an arrangement for producing sponge iron comprises a direct reduction shaft 1 having an inlet 2 for the introduction of iron ore and an outlet 3 for the removal of produced sponge iron out of the direct reduction shaft 1. The arrangement further comprises a hydrogen gas source 4, 21, a first gas line 5 extending from the hydrogen gas source 4, 21 to the reduction shaft 1, a carbon dioxide gas source 6, an oxygen gas source 7, and a heater 16 arranged in the first gas line 5, for heating a gas flowing in the first gas line 5. The arrangement further comprises a second gas line 8 which extends from the carbon dioxide gas source 6 to the first gas line 5 and which is configured to enable addition of carbon dioxide gas from the carbon dioxide gas source 6 to a reduction gas flowing in the first gas line 5 from the hydrogen gas source 4, 21 towards the direct reduction shaft 1, and a third gas line 9 which extends from the oxygen gas source 7 and is connected to the first gas line 5 downstream the heater 16 and which is configured to enable addition of oxygen gas from the oxygen gas source 6 to a reduction gas flowing in the first gas line 5 from the hydrogen gas source 4, 21 towards the direct reduction shaft 1. Compressors (not shown) for generating a predetermined process gas pressure (typically in the range of 3-8 bar), and pressure inside the direct reduction shaft 1, are also comprised by the arrangement.

The hydrogen gas source 4 comprises an electrolyzer unit or a pure hydrogen gas storage, or a combination thereof, here indicated with reference numeral 4. In the embodiment shown, the hydrogen gas source also comprises a return gas circuit 21 extending from the top of the reduction shaft 1 and connected to the first gas line 5. The return gas circuit may comprise one or more devices for cleaning of return gas, compressors, etc. as is well known within this field of technology. The reduction gas is thus comprised by gas both from the electrolyzer unit or storage 4 and from the return gas circuit 21. According to one embodiment, the reduction gas comprises at least 90 vol.% hydrogen gas.

The arrangement further comprises a first flow rate sensor 10 for sensing the flow rate of the reduction gas in the first gas line 5, a first valve device 11 for regulating a flow rate of carbon dioxide in said second gas line 8, and a control unit 12 configured to control the first valve device 11 on basis of input from the first flow rate sensor 10.

The arrangement further comprises a gas composition sensor 19 for sensing the composition of the reduction gas in the first gas line 5, wherein the control unit 12 is configured to control the first valve device 11 on basis on input from the gas composition sensor 19.

There is also provided a temperature sensor 13 for sensing the temperature of gas inside the first gas line 5 downstream of a point at which the second gas line 8 and the third gas line 9 are connected to the first gas line 5, and a second valve device 14 for regulating a flow rate of the added oxygen gas in the third gas line 9, wherein the control unit 12 is configured to control a flow rate of the added oxygen gas in the third gas line 9 on basis of input from the temperature sensor 13.

The arrangement further comprises a second temperature sensor 20 for sensing the temperature of gas inside the first gas line 5 downstream the heater 16 and upstream the point at which the third gas line 9 is connected to the first gas line 5. The control unit 12 is configured to allow a flow of added oxygen gas in the third gas line 9 only provided that the temperature measured by the second temperature sensor 20 is above a predetermined level, preferably above 750 °C.

The first gas line 5 comprises an end 15 through which hydrogen-rich process gas, formed by the reduction gas, the added carbon dioxide gas and the added oxygen gas, is introduced into the reduction shaft 1. The third gas line 9 is connected to the first gas line 5 adjacent said end.

The second and the third gas lines 8, 9 are connected to the first gas line 5 at the same point along the first gas line 5. As an alternative, not shown, the third gas line 9 could be connected to the first gas line 5 downstream a point along the first gas line 5 at which the second gas line 8 is connected to the first gas line 5. The second gas line 8 could even be connected to the first gas line 5 upstream the heater 16.

The arrangement is arranged so as to operate in accordance with the method of the present invention. The method is a method for the production of sponge iron from iron ore, comprising the steps of: charging iron ore via the reduction shaft inlet 2 into the direct reduction shaft 1; introducing a hydrogen-rich process gas into the direct reduction shaft 1 in order to reduce the iron ore and produce sponge iron; wherein the step of introducing the hydrogen-rich process gas comprises the steps of: conducting a reduction gas comprising at least 80 vol.% hydrogen gas through the first gas line 5 from the hydrogen gas source 4 to the reduction shaft 1, and heating the reduction gas in said first gas line 5 by means of the heater 16 to a first temperature T1. The method also comprises the steps of adding carbon dioxide gas from the carbon dioxide source 6 to the reduction gas, in this case downstream a point along the first gas line 5 at which the reduction gas is heated by the heater 16, and adding oxygen gas from the oxygen gas source 7 to the heated reduction gas to form said hydrogen-rich process gas, and introducing the hydrogen-rich process gas is into the shaft 1. The carbon dioxide gas is added via the second gas line 8, and the oxygen gas source is added via the third gas line 9.

The method further comprises the steps of measuring, by means of the first flow rate sensor 11 a flow rate of the reduction gas in the first gas line 5, and controlling, by means of the control unit 12 and the first valve device 11, a flow rate of added carbon dioxide on basis of the measured flow rate of the reduction gas. Carbon dioxide is added in such amount that it results in a carburization of the produced sponge iron such that the sponge iron will have a carbon content of at least 1.0 wt.%.

The method comprises the further steps of measuring, by means of the gas composition sensor 19, the composition of the reduction gas in the first gas line 5, and controlling, by means of the control unit 12 and the first valve device 11, the flow rate of added carbon dioxide on basis of the measured composition of the reduction gas.

Further, the method comprises the steps of: a) measuring, by means of the first temperature sensor 13, the temperature of the hydrogen-rich process gas downstream a point along the first gas line 5 at which the carbon dioxide gas and the oxygen gas is added to the reduction gas, and b) controlling, by means of the control unit 12 and the second valve device 14, a flow rate of the added oxygen gas on basis of the measured temperature of the hydrogen-rich process gas.

The method comprises the steps of repeating steps a) to b), wherein step b) comprises the steps of
c) increasing, by means of the control unit 12 and the second valve device 14, the flow rate of the added oxygen gas if the measured temperature (measured by means of the first temperature sensor 13) of the hydrogen-rich process gas is below a first threshold value Tth1, and
d) decreasing the flow rate of the added oxygen gas if the measured temperature of the hydrogen-rich process gas is above a second threshold value Tth2, wherein Tth1 < Tth2.

According to one embodiment, Tth1 = 900 °C. Thus, if or when the measured temperature goes below 900 °C, the flow rate of added oxygen gas is increased. The incremental steps with which the flow rate is increased is a matter of design choice.

According to one embodiment Tth2 = 1100 °C. Thus, if the measured temperature goes above 1100 °C, the flow rate of the added oxygen gas is decreased. The incremental steps with which the flow rated is decreased is a matter of design choice.

The method also comprises the step of measuring, by means of the second temperature sensor 20, the temperature of the heated reduction gas upstream the point along said first gas line 5 at which the oxygen gas is added to the reduction gas and adding oxygen gas only when the temperature of the heated reduction gas at said point is above 800 °C. Accordingly, if the measured temperature goes below 800 °C, the control unit 12 closes the second valve device 14, and the heater 16 is responsible for heating the gas until it reaches 800 °C. First then will oxygen gas be added to further increase the temperature (to above 900 °C).

Each of the carbon dioxide gas and the oxygen gas is added to the reduction gas in the first gas line 5 within 5 meters from an end of the first gas line 5 where the hydrogen-rich process gas is introduced into the reduction shaft 1.

## Claims

1. A method for the production of sponge iron from iron ore, comprising the steps of:
- charging iron ore into a direct reduction shaft (1);
- introducing a hydrogen-rich process gas into the direct reduction shaft (1) in order to reduce the iron ore and produce sponge iron; wherein the step of introducing the hydrogen-rich process gas comprises the steps of:
- conducting a reduction gas comprising at least 80 vol.% hydrogen gas through a first gas line (5) from a hydrogen gas source (4) to the reduction shaft (1), and
- heating the reduction gas in said first gas line (5) to a first temperature T1, - adding carbon dioxide gas to the reduction gas, upstream or downstream a point along the first gas line (5) at which the reduction gas is heated, and adding oxygen gas to the heated reduction gas to form said hydrogen-rich process gas, and
- introducing the hydrogen-rich process gas into the shaft (1), said method being **characterized in that** it comprises the steps of
- measuring a flow rate of the reduction gas in the first gas line (5), and
- controlling a flow rate of added carbon dioxide on basis of the measured flow rate of the reduction gas.

2. The method according to claim 1, wherein the method comprises the further steps of:
- measuring the composition of the reduction gas in the first gas line (5), and
- controlling the flow rate of added carbon dioxide on basis of the measured composition of the reduction gas.

3. The method according to claim 1 or 2, wherein said method comprises the steps of:
- a) measuring a temperature of the hydrogen-rich process gas downstream a point along the first gas line (5) at which the carbon dioxide gas and the oxygen gas is added to the reduction gas, and
- b) controlling a flow rate of the added oxygen gas on basis of the measured temperature of the hydrogen-rich process gas.

4. The method according to claim 3, wherein the method comprises the steps of repeating steps a) to b), wherein step b) comprises the steps of
- c) increasing the flow rate of the added oxygen gas if the measured temperature of the hydrogen-rich process gas is below a first threshold value Tₜₕ₁, and
- d) decreasing the flow rate of the added oxygen gas if the measured temperature of the hydrogen-rich process gas is above a second threshold value Tₜₕ₂, wherein Tₜₕ₁ < Tₜₕ₂.

5. The method according to claim 4, wherein Tₜₕ₁ > 750 °C.

6. The method according to claim 4, wherein Tₜₕ₁ > 900 °C.

7. The method according to any one of claims 4-6, wherein Tₜₕ₂ < 1100 °C.

8. The method according to any one of claims 1-7, comprising the step of measuring the temperature of the heated reduction gas upstream a point along said first gas line (5) at which the oxygen gas is added to the reduction gas and adding oxygen gas only when the temperature of the heated reduction gas at said point is above 750 °C.

9. The method according to any one of claims 1-8, wherein each of the carbon dioxide gas and the oxygen gas is added to the reduction gas in the first gas line (5) in at an end (15) of the first gas line (5) where the hydrogen-rich process gas is introduced into the reduction shaft (1).

10. An arrangement for producing sponge iron, comprising:
- a direct reduction shaft (1) having an inlet (2) for the introduction of iron ore and an outlet (3) for the removal of produced sponge iron out of the direct reduction shaft (1),
- a hydrogen gas source (4),
- a first gas line (5) extending from the hydrogen gas source (4) to the reduction shaft (1),
- a carbon dioxide gas source (6),
- an oxygen gas source (7), and
- a heater (16) arranged in the first gas line (5), for heating a gas flowing in the first gas line (5),
- a second gas line (8) which extends from the carbon dioxide gas source (6) to the first gas line (5) and which is configured to enable addition of carbon dioxide gas from the carbon dioxide gas source (6) to a reduction gas flowing in the first gas line (5) from the hydrogen gas source (4) towards the direct reduction shaft (1), and
- a third gas line (9) which extends from the oxygen gas source (7) and is connected to the first gas line (5) downstream the heater (16) and which is configured to enable addition of oxygen gas from the oxygen gas source (6) to a reduction gas flowing in the first gas line (5) from the hydrogen gas source (4) towards the direct reduction shaft (1), the arrangement being **characterized in that** it comprises
- a first flow rate sensor (10) for sensing the flow rate of the reduction gas in the first gas line (5),
- a first valve device (11) for regulating a flow rate of carbon dioxide in said second gas line (8), and
- a control unit (12) configured to control the first valve device (11) on basis of input from the first flow rate sensor (10).

11. The arrangement according to claim 10, comprising
- a gas composition sensor (19) for sensing the composition of the reduction gas in the first gas line (5), and
- a control unit (12) configured to control the first valve device (11) on basis on input from the gas composition sensor (19).

12. The arrangement according to claim 10 or 11, comprising
- a temperature sensor (13) for sensing the temperature of gas inside the first gas line (5) downstream of a point at which the second gas line (8) and the third gas line (9) are connected to the first gas line (5)
- a second valve device (14) for regulating a flow rate of the added oxygen gas in the third gas line (9), and
- a control unit (12) configured to control a flow rate of the added oxygen gas in the third gas line (9) on basis of input from the temperature sensor (13).

13. The arrangement according to claim 12, comprising
- a second temperature sensor (20) for sensing the temperature of gas inside the first gas line (5) downstream the heater (16) and upstream the point at which the third gas line (9) is connected to the first gas line (5), wherein the control unit (12) is configured to allow a flow of added oxygen gas in the third gas line (9) only provided that the temperature measured by the second temperature sensor (20) is above a predetermined level.

14. The arrangement according to any one of claims 10-13, wherein the first gas line (5) comprises an end (15) through which hydrogen-rich process gas, formed by the reduction gas, the added carbon dioxide gas and the added oxygen gas, is introduced into the reduction shaft (1), and wherein at least the third gas line (9) is connected to the first gas line (5) at said end.

15. The arrangement according to any of claims 10-14, wherein the second and the third gas lines (8, 9) are connected to the first gas line (5) at the same point along the first gas line (5), **or** wherein the third gas line (9) is connected to the first gas line (5) downstream a point along the first gas line (5) at which the second gas line (8) is connected to the first gas line (5).

## Patentansprüche

1. Verfahren zum Herstellen von Eisenschwamm aus Eisenerz, umfassend die Schritte:
- Beschicken eines Direktreduktionsschachts (1) mit Eisenerz;
- Einleiten eines wasserstoffreichen Prozessgases in den Direktreduktionsschacht (1), um das Eisenerz zu reduzieren und Eisenschwamm herzustellen; wobei der Schritt des Einleitens des wasserstoffreichen Prozessgases die Schritte umfasst:
- Leiten eines Reduktionsgases, das mindestens 80 Vol.-% Wasserstoffgas umfasst, durch eine erste Gasleitung (5) von einer Wasserstoffgasquelle (4) zum Reduktionsschacht (1), und
- Erhitzen des Reduktionsgases in der ersten Gasleitung (5) auf eine erste Temperatur T1, - Zugeben von Kohlendioxidgas zum Reduktionsgas stromaufwärts oder stromabwärts eines Punkts entlang der ersten Gasleitung (5), an dem das Reduktionsgas erhitzt wird, und Zugeben von Sauerstoffgas zum erhitzten Reduktionsgas zur Bildung des wasserstoffreichen Prozessgases, und
- Einleiten des wasserstoffreichen Prozessgases in den Schacht (1), wobei das Verfahren **dadurch gekennzeichnet ist, dass** es die Schritte umfasst:
- Messen einer Strömungsrate des Reduktionsgases in der ersten Gasleitung (5), und
- Steuern einer Strömungsrate von zugegebenem Kohlendioxid auf Basis der gemessenen Strömungsrate des Reduktionsgases.

2. Verfahren nach Anspruch 1, wobei das Verfahren die weiteren Schritte umfasst:
- Messen der Zusammensetzung des Reduktionsgases in der ersten Gasleitung (5), und
- Steuern der Strömungsrate von zugegebenem Kohlendioxid auf Basis der gemessenen Zusammensetzung des Reduktionsgases.

3. Verfahren nach Anspruch 1 oder 2, wobei das Verfahren die Schritte umfasst:
- a) Messen einer Temperatur des wasserstoffreichen Prozessgases stromabwärts eines Punkts entlang der ersten Gasleitung (5), an dem das Kohlendioxidgas und das Sauerstoffgas dem Reduktionsgas zugegeben werden, und
- b) Steuern einer Strömungsrate des zugegebenen Sauerstoffgases auf Basis der gemessenen Temperatur des wasserstoffreichen Prozessgases.

4. Verfahren nach Anspruch 3, wobei das Verfahren die Schritte des Wiederholens der Schritte a) bis b) umfasst, wobei Schritt b) die Schritte umfasst:
- c) Erhöhen der Strömungsrate des zugegebenen Sauerstoffgases, wenn die gemessene Temperatur des wasserstoffreichen Prozessgases unterhalb eines ersten Schwellenwerts Tₜₕ₁ liegt, und
- d) Verringern der Strömungsrate des zugegebenen Sauerstoffgases, wenn die gemessene Temperatur des wasserstoffreichen Prozessgases oberhalb eines zweiten Schwellenwerts Tₜₕ₂ liegt, wobei Tₜₕ₁ < Tₜₕ₂.

5. Verfahren nach Anspruch 4, wobei Tₜₕ₁ > 750 °C.

6. Verfahren nach Anspruch 4, wobei Tₜₕ₁ > 900 °C.

7. Verfahren nach einem der Ansprüche 4 bis 6, wobei Tₜₕ₂ < 1100 °C.

8. Verfahren nach einem der Ansprüche 1 bis 7, umfassend den Schritt des Messens der Temperatur des erhitzten Reduktionsgases stromaufwärts eines Punkts entlang der ersten Gasleitung (5), an dem das Sauerstoffgas dem Reduktionsgas zugegeben wird, und Zugeben von Sauerstoffgas nur dann, wenn die Temperatur des erhitzten Reduktionsgases an diesem Punkt über 750 °C liegt.

9. Verfahren nach einem der Ansprüche 1 bis 8, wobei sowohl das Kohlendioxidgas als auch das Sauerstoffgas dem Reduktionsgas in der ersten Gasleitung (5) an einem Ende (15) der ersten Gasleitung (5) zugegeben werden, an der das wasserstoffreiche Prozessgas in den Reduktionsschacht (1) eingeleitet wird.

10. Anordnung zum Herstellen von Eisenschwamm, umfassend:
- einen Direktreduktionsschacht (1) mit einem Einlass (2) zur Einleitung von Eisenerz und einem Auslass (3) zur Entnahme von hergestelltem Eisenschwamm aus dem Direktreduktionsschacht (1),
- eine Wasserstoffgasquelle (4),
- eine erste Gasleitung (5), die sich von der Wasserstoffgasquelle (4) zum Reduktionsschacht (1) erstreckt,
- eine Kohlendioxidgasquelle (6),
- eine Sauerstoffgasquelle (7), und
- einen Erhitzer (16), der in der ersten Gasleitung (5) angeordnet ist, zum Erhitzen eines in der ersten Gasleitung (5) strömenden Gases,
- eine zweite Gasleitung (8), die sich von der Kohlendioxidgasquelle (6) zur ersten Gasleitung (5) erstreckt und dazu eingerichtet ist, die Zugabe von Kohlendioxidgas aus der Kohlendioxidgasquelle (6) zu einem Reduktionsgas zu ermöglichen, das in der ersten Gasleitung (5) von der Wasserstoffgasquelle (4) in Richtung des Direktreduktionsschachts (1) strömt, und
- eine dritte Gasleitung (9), die sich von der Sauerstoffgasquelle (7) erstreckt und mit der ersten Gasleitung (5) stromabwärts des Erhitzers (16) verbunden ist und die dazu eingerichtet ist, die Zugabe von Sauerstoffgas aus der Sauerstoffgasquelle (6) zu einem Reduktionsgas zu ermöglichen, das in der ersten Gasleitung (5) von der Wasserstoffgasquelle (4) in Richtung des Direktreduktionsschachts (1) strömt, wobei die Anordnung **dadurch gekennzeichnet ist, dass** sie umfasst:
- einen ersten Strömungsratensensor (10) zum Erfassen der Strömungsrate des Reduktionsgases in der ersten Gasleitung (5),
- eine erste Ventileinrichtung (11) zum Regeln einer Strömungsrate von Kohlendioxid in der zweiten Gasleitung (8), und
- eine Steuereinheit (12), die dazu eingerichtet ist, die erste Ventileinrichtung (11) auf Basis einer Eingabe vom ersten Strömungsratensensor (10) zu steuern.

11. Anordnung nach Anspruch 10, umfassend:
- einen Gaszusammensetzungssensor (19) zum Erfassen der Zusammensetzung des Reduktionsgases in der ersten Gasleitung (5), und
- eine Steuereinheit (12), die dazu eingerichtet ist, die erste Ventileinrichtung (11) auf Basis einer Eingabe vom Gaszusammensetzungssensor (19) zu steuern.

12. Anordnung nach Anspruch 10 oder 11, umfassend:
- einen Temperatursensor (13) zum Erfassen der Temperatur des Gases in der ersten Gasleitung (5) stromabwärts eines Punkts, an dem die zweite Gasleitung (8) und die dritte Gasleitung (9) mit der ersten Gasleitung (5) verbunden sind,
- eine zweite Ventileinrichtung (14) zum Regeln einer Strömungsrate des zugegebenen Sauerstoffgases in der dritten Gasleitung (9), und
- eine Steuereinheit (12), die dazu eingerichtet ist, eine Strömungsrate des zugegebenen Sauerstoffgases in der dritten Gasleitung (9) auf Basis der Eingabe vom Temperatursensor (13) zu steuern.

13. Anordnung nach Anspruch 12, umfassend:
- einen zweiten Temperatursensor (20) zum Erfassen der Temperatur des Gases in der ersten Gasleitung (5) stromabwärts des Erhitzers (16) und stromaufwärts des Punkts, an dem die dritte Gasleitung (9) mit der ersten Gasleitung (5) verbunden ist, wobei die Steuereinheit (12) dazu eingerichtet ist, einen Durchfluss von zugegebenem Sauerstoffgas in der dritten Gasleitung (9) nur dann zuzulassen, wenn die vom zweiten Temperatursensor (20) gemessene Temperatur über einem vorbestimmten Niveau liegt.

14. Anordnung nach einem der Ansprüche 10 bis 13, wobei die erste Gasleitung (5) ein Ende (15) umfasst, durch das wasserstoffreiches Prozessgas, gebildet aus dem Reduktionsgas, dem zugegebenen Kohlendioxidgas und dem zugegebenen Sauerstoffgas, in den Reduktionsschacht (1) eingeleitet wird, und wobei zumindest die dritte Gasleitung (9) mit der ersten Gasleitung (5) an diesem Ende verbunden ist.

15. Anordnung nach einem der Ansprüche 10 bis 14, wobei die zweite und die dritte Gasleitung (8, 9) mit der ersten Gasleitung (5) am selben Punkt entlang der ersten Gasleitung (5) verbunden sind, **oder** wobei die dritte Gasleitung (9) mit der ersten Gasleitung (5) stromabwärts eines Punkts entlang der ersten Gasleitung (5) verbunden ist, an dem die zweite Gasleitung (8) mit der ersten Gasleitung (5) verbunden ist.

## Revendications

1. Procédé de production de fer spongieux à partir de minerai de fer, comprenant les étapes consistant à :
- charger du minerai de fer à l'intérieur d'une cuve de réduction directe (1) ;
- introduire un gaz de traitement riche en hydrogène à l'intérieur de la cuve de réduction directe (1) afin de réduire le minerai de fer et de produire du fer spongieux ; dans lequel l'étape d'introduction du gaz de traitement riche en hydrogène comprend les étapes consistant à :
- conduire un gaz de réduction comprenant au moins 80 % en volume de gaz hydrogène à travers une première ligne de gaz (5) à partir d'une source de gaz hydrogène (4) vers la cuve de réduction (1), et
- chauffer le gaz de réduction dans ladite première ligne de gaz (5) à une première température T1, ajouter du gaz dioxyde de carbone au gaz de réduction, en amont d'un point le long de la première ligne de gaz (5) au niveau duquel le gaz de réduction est chauffé ou en aval de celui-ci, et ajouter du gaz oxygène au gaz de réduction chauffé pour former ledit gaz de traitement riche en hydrogène, et
- introduire le gaz de traitement riche en hydrogène à l'intérieur de la cuve (1), ledit procédé étant **caractérisé en ce qu'**il comprend les étapes consistant à
- mesurer un débit du gaz de réduction dans la première ligne de gaz (5), et
- commander un débit de dioxyde de carbone ajouté sur la base du débit mesuré du gaz de réduction.

2. Procédé selon la revendication 1, dans lequel le procédé comprend les étapes supplémentaires consistant à :
- mesurer la composition du gaz de réduction dans la première ligne de gaz (5), et
- commander le débit de dioxyde de carbone ajouté sur la base de la composition mesurée du gaz de réduction.

3. Procédé selon la revendication 1 ou 2, dans lequel ledit procédé comprend les étapes consistant à :
- a) mesurer une température du gaz de traitement riche en hydrogène en aval d'un point le long de la première ligne de gaz (5) au niveau duquel le gaz dioxyde de carbone et le gaz oxygène sont ajoutés au gaz de réduction, et
- b) commander un débit du gaz oxygène ajouté sur la base de la température mesurée du gaz de traitement riche en hydrogène.

4. Procédé selon la revendication 3, dans lequel le procédé comprend les étapes consistant à répéter les étapes a) à b), dans lequel l'étape b) comprend les étapes consistant à
- c) augmenter le débit du gaz oxygène ajouté si la température mesurée du gaz de traitement riche en hydrogène est en dessous d'une première valeur seuil Tₜₕ₁, et
- d) diminuer le débit du gaz oxygène ajouté si la température mesurée du gaz de traitement riche en hydrogène est au-dessus d'une seconde valeur seuil Tₜₕ₂, dans lequel Tₜₕ₁ < Tₜₕ₂.

5. Procédé selon la revendication 4, dans lequel Tₜₕ₁ > 750°C.

6. Procédé selon la revendication 4, dans lequel Tₜₕ₁ > 900°C.

7. Procédé selon l'une quelconque des revendications 4 à 6, dans lequel Tₜₕ₂ < 1100°C.

8. Procédé selon l'une quelconque des revendications 1 à 7, comprenant l'étape consistant à mesurer la température du gaz de réduction chauffé en amont d'un point le long de ladite première ligne de gaz (5) au niveau duquel le gaz oxygène est ajouté au gaz de réduction et à ajouter du gaz oxygène uniquement lorsque la température du gaz de réduction chauffé au niveau dudit point est au-dessus de 750°C.

9. Procédé selon l'une quelconque des revendications 1 à 8, dans lequel chacun du gaz dioxyde de carbone et du gaz oxygène est ajouté au gaz de réduction dans la première ligne de gaz (5) au niveau d'une extrémité (15) de la première ligne de gaz (5) où le gaz de traitement riche en hydrogène est introduit à l'intérieur de la cuve de réduction (1).

10. Agencement pour la production de fer spongieux, comprenant :
- une cuve de réduction directe (1) ayant une entrée (2) pour l'introduction de minerai de fer et une sortie (3) pour le retrait de fer spongieux produit hors de la cuve de réduction directe (1),
- une source de gaz hydrogène (4),
- une première ligne de gaz (5) s'étendant à partir de la source de gaz hydrogène (4) vers la cuve de réduction (1),
- une source de gaz dioxyde de carbone (6),
- une source de gaz oxygène (7), et
- un dispositif de chauffage (16) agencé dans la première ligne de gaz (5), pour le chauffage d'un gaz s'écoulant dans la première ligne de gaz (5),
- une deuxième ligne de gaz (8) qui s'étend à partir de la source de gaz dioxyde de carbone (6) vers la première ligne de gaz (5) et qui est configurée pour permettre l'addition de gaz dioxyde de carbone provenant de la source de gaz dioxyde de carbone (6) à un gaz de réduction s'écoulant dans la première ligne de gaz (5) depuis la source de gaz hydrogène (4) en direction de la cuve de réduction directe (1), et
- une troisième ligne de gaz (9) qui s'étend à partir de la source de gaz oxygène (7) et est raccordée à la première ligne de gaz (5) en aval du dispositif de chauffage (16) et qui est configurée pour permettre l'addition de gaz oxygène provenant de la source de gaz oxygène (6) à un gaz de réduction s'écoulant dans la première ligne de gaz (5) depuis la source de gaz hydrogène (4) en direction de la cuve de réduction directe (1), l'agencement étant **caractérisé en ce qu'**il comprend
- un premier capteur de débit (10) pour la détection du débit du gaz de réduction dans la première ligne de gaz (5),
- un premier dispositif de vanne (11) pour la régulation d'un débit de dioxyde de carbone dans ladite deuxième ligne de gaz (8), et
- une unité de commande (12) configurée pour la commande du premier dispositif de vanne (11) sur la base d'une entrée provenant du premier capteur de débit (10).

11. Agencement selon la revendication 10, comprenant
- un capteur de composition de gaz (19) pour la détection de la composition du gaz de réduction dans la première ligne de gaz (5), et
- une unité de commande (12) configurée pour la commande du premier dispositif de vanne (11) sur la base d'une entrée provenant du capteur de composition de gaz (19).

12. Agencement selon la revendication 10 ou 11, comprenant
- un capteur de température (13) pour la détection de la température de gaz à l'intérieur de la première ligne de gaz (5) en aval d'un point au niveau duquel la deuxième ligne de gaz (8) et la troisième ligne de gaz (9) sont raccordées à la première ligne de gaz (5)
- un second dispositif de vanne (14) pour la régulation d'un débit du gaz oxygène ajouté dans la troisième ligne de gaz (9), et
- une unité de commande (12) configurée pour la commande d'un débit du gaz oxygène ajouté dans la troisième ligne de gaz (9) sur la base d'une entrée provenant du capteur de température (13).

13. Agencement selon la revendication 12, comprenant
- un second capteur de température (20) pour la détection de la température de gaz à l'intérieur de la première ligne de gaz (5) en aval du dispositif de chauffage (16) et en amont du point au niveau duquel la troisième ligne de gaz (9) est raccordée à la première ligne de gaz (5), dans lequel l'unité de commande (12) est configurée pour permettre un écoulement de gaz oxygène ajouté dans la troisième ligne de gaz (9) uniquement à condition que la température mesurée par le second capteur de température (20) soit au-dessus d'un niveau prédéterminé.

14. Agencement selon l'une quelconque des revendications 10 à 13, dans lequel la première ligne de gaz (5) comprend une extrémité (15) à travers laquelle du gaz de traitement riche en hydrogène, formé par le gaz de réduction, le gaz dioxyde de carbone ajouté et le gaz oxygène ajouté, est introduit à l'intérieur de la cuve de réduction (1), et dans lequel au moins la troisième ligne de gaz (9) est raccordée à la première ligne de gaz (5) au niveau de ladite extrémité.

15. Agencement selon l'une quelconque des revendications 10 à 14, dans lequel la deuxième et la troisième ligne de gaz (8, 9) sont raccordées à la première ligne de gaz (5) au niveau du même point le long de la première ligne de gaz (5), **ou** dans lequel la troisième ligne de gaz (9) est raccordée à la première ligne de gaz (5) en aval d'un point le long de la première ligne de gaz (5) au niveau duquel la deuxième ligne de gaz (8) est raccordée à la première ligne de gaz (5).
